Europäisches Patentamt

European Patent Office

Office européen des brevets

(11) Publication number: **0 400 984 A2**

# EUROPEAN PATENT APPLICATION

(21) Application number: **90305870.9**

(22) Date of filing: **30.05.90**

(51) Int. Cl.⁵: **G11B 5/71**

(30) Priority: **30.05.89 JP 136640/89**

(43) Date of publication of application:
**05.12.90 Bulletin 90/49**

(84) Designated Contracting States:
**DE ES FR GB IT NL**

(71) Applicant: **NIPPON SHEET GLASS CO., LTD.**
**5-11, 3-Chome Doshomachi**
**Chuo-ku Osaka(JP)**

(72) Inventor: **Shimizu, Tomoyasu, c/o Nippon**
**Sheet Glass Co. Ltd.**
**5-11, 3-chome, Doshomachi, Chuo-ku**
**Osaka(JP)**
Inventor: **Katayama, Shinya, c/o Nippon Sheet**
**Glass Co. Ltd.**
**5-11, 3-chome, Doshomachi, Chuo-ku**
**Osaka(JP)**
Inventor: **Tsuno, Toshio, c/o Nippon Sheet**
**Glass Co. Ltd.**
**5-11, 3-chome, Doshomachi, Chuo-ku**
**Osaka(JP)**

(74) Representative: **Jackson, David Spence et al**
**REDDIE & GROSE 16, Theobalds Road**
**London, WC1X 8PL(GB)**

(54) **Magnetic recording media.**

(57) For improved lubricancy and abrasion resistance a metal or semiconductor protection film (4) is applied over a metal magnetic layer (3) and is oxidized at the surface by UV radiation in an atmosphere of ozone or by exposure to oxygen plasma. The protection film (4) may be silicon, and provide an oxide layer (5) over which a lubricant layer (6) is applied. The lubricant layer (6) is preferably a perfluoroalkyl polyether.

EP 0 400 984 A2

# FIG. 1

## MAGNETIC RECORDING MEDIA

### BACKGROUND OF THE INVENTION

Field of the Invention

The present invention concerns magnetic recording media used for magnetic recording apparatus such as magnetic disc devices and a method of producing them and, in particular, it relates to magnetic recording media with improved endurance and a method of producing them.

Description of the Prior Art

In magnetic recording media for conducting high density recording such as hard magnetic discs, magnetic metal thin film media formed by means of sputtering, vapor deposition, etc. have been used recently instead of conventional coating type media using coated magnetic films containing magnetic powder and binder.

When recording/reproduction is conducted to a hard magnetic disc, a CSS system (Contact-Start-Stop system) has generally been used in which recording/reproduction is conducted in such a state that a minute air gap is formed between a magnetic head and a magnetic disc by applying a predetermined rotation to the disc, the head and the surface of the magnetic disc are brought into contact in a state where the disc stops its rotation, and the head and the magnetic disc move relative to each other under frictional contact upon starting or stopping the rotation.

In the CSS system, the head and the surface of the magnetic disc are gradually abrased due to the friction caused by sliding contact. Further, if minute dusts, etc. are present during recording/reproduction, the head is brought into contact with the surface of the magnetic disc under high speed to exert great frictional force between the head and the surface of the magnetic disc to possibly destroy the head or the magnetic membrane.

In the magnetic metal thin film media, the foregoing problems are particularly remarkable since the magnetic metal thin film has a large friction coefficient and the film thickness is thin. In view of the above, there has been used a magnetic recording medium prepared by forming a carbon protection film on a magnetic metal film and further coating thereover a liquid lubricant for providing corrosion resistance and lubricancy (for example, as disclosed in Japanese Patent Laid-Open Sho 61-208620) or a magnetic recording medium prepared by forming an inorganic oxide such as $SiO_2$ to the upper surface of the magnetic metal film directly or by way of a first protection film and then coating a liquid lubricant (for example, fluoro oil: perfluoroalkyl polyether, etc.) to the upper surface of the protection film (for example, as disclosed in Japanese Patent Laid-Open Sho 61-160834).

Further, it has also been attempted to use a liquid lubricant having functional groups for increasing the bonding force with the inorganic oxide protection film (for example, as disclosed in Japanese Patent Laid-Open Sho 61-208618 and Sho 61-220120).

However, in the conventional magnetic recording medium having a carbon protection film coated with the liquid lubricant, since the bonding between the protection film and the lubricant is weak, the effect of the lubricant is gradually reduced to increase the frictional force during repeating CSS, thus failing to obtain sufficient abrasion resistance and scratch resistance.

Further, in the case of the uppermost layer made of an inorganic, oxide protection film, if a lubricant having polar groups or functional groups is coated thereover, the bonding force between the oxide and the lubricant can be increased but the formation of the inorganic oxide requires a reactive sputtering method which is expensive or a sol-gel method which is not satisfactory in view of the weather proofness, and it can not be said practical.

### OBJECT AND SUMMARY OF THE INVENTION

An object of the present invention is to overcome the foregoing problems in the prior art and provide magnetic recording media with remarkably improved lubricancy and abrasion resistance, as well as a method of producing them.

The magnetic recording medium according to the present invention has a metal or semiconductor protection film prepared by applying an oxidizing treatment to the surface.

The method of producing magnetic recording media according to the present invention comprises:

forming a metal or semiconductor protection film on a magnetic film, and oxidizing the surface of the metal or semiconductor protection film by,

oxidation under irradiation of UV-rays in an $O_3$ - (ozone) atomsphere or

oxidation in oxygen plasmas in a pressure-reduced vessel.

## BRIEF DESCRIPTION OF THE DRAWINGS

Fig. 1 is a cross sectional view for a magnetic recording medium according to the present invention;

Fig. 2 is a schematic view for an oxidizing device used in the present invention; and

Fig. 3 is a graph illustrating the change of kinetic friction coefficient relative to the cycles of a CSS test, in which the solid line shows a test result for a disc according to the present invention and a chained line shows a test result for a disk using a carbon film as the protection film in a comparative example.

## DETAILED DESCRIPTION OF PREFERRED EMBODIMENTS

A metal or semiconductor protection film applied at the surface with an oxidizing treatment can be produced by a method of producing magnetic recording media which comprises:

forming a metal or semiconductor protection film on a magnetic film, and then applying, to the metal or semiconductor protection film,

oxidation under irradiation of UV-rays in an $O_3$ - (ozone) atmosphere or

oxidation in oxygen plasmas in a pressure-reduced vessel.

According to the present invention, since the uppermost surface is converted into an oxide, bonding force with the liqlubricant to be coated thereover is increased, to improve the durability.

The film thickness of the oxide film formed is preferably from 3 to 20 nm. If it is less than 3 nm, the effect inherent to the present invention is scarcely developed. On the other hand, if it is greater than 20 nm, the distance between the head and the magnetic film becomes excessive and the property of the magnetic disc tends to be worsened.

As the liquid lubricant, perfluoro polyethers are preferred and, among all, a perfluoro polyether with an average molecular weight of 2000 to 4000 and having atom groups such as -OH, -COOH, -NCO or aromatic ring at the terminals are preferred since they increase the bonding force with the oxide in the uppermost surface.

As examples of the metal or semiconductor protection layer, there can be mentioned those containing at least one of the metals or semiconductor selected from the group consisting of Si, Cr, Al, Ti, Ta, Zr, Nb, Mo, V, W and Y, as well as the metal or semiconductor as mentioned above that further contains carbon.

A protection film in an amorphous state is particularly preferred since the film is oxidized uniformly from the surface in the subsequent oxidizing process. If the film is a polycrystalline film, there is a problem that the rate of oxidization from the grain boundary is high and uniform oxidization cannot be attained.

In particular, silicon-containing metal or semiconductor is preferred since silicon oxide as the oxide thereof can provide a great bonding force with the lubricant and develop excellent lubricancy and durability.

As the method of forming a metal or semiconductor oxide, there can be mentioned a method of sputtering a desired metal or semiconductor and then irradiating UV-rays in an ozone atmosphere or a method of exposure to oxygen plasmas.

In the former method, there is no requirement for high temperature heating during the oxidizing treatment and an oxide film of several to ten nanometers can be formed without deteriorating the characteristics of the underlying magnetic layer. Further it has a merit capable of allowing oxidizing of a great amount of material all at once.

The liquid lubricant is coated to a film thickness of less than 10 nm by means of dipping, spin coating or the like after forming the inorganic oxide layer.

Heat treatment within a range from $60\,^{\circ}C$ to $250\,^{\circ}C$ applied after the coating can promote the re-arrangement of lubricant molecules to stable positions on the inorganic oxide layer in view of energy and remarkably promote the effect of increasing the adhesion.

According to the present invention, since a first metal or semiconductor protection film is formed on a magnetic metal thin film and an inorganic oxide protection layer is formed further thereover, when a lubricant such as a perfluoro alkyl polyether having atom groups containing, for example, -OH, -COOH, -NCO or aromatic ring at the terminal end of the main chain, strong bonding is formed between the inorganic oxide protection layer and the lubricant as compared with the bonding between the metal or semiconductor protection layer and the lubricant, to improve the durability.

Particularly, in the case of using a perfluoro alkyl polyether having an aromatic ring at the terminal end, the atom group containing the aromatic ring is polarized due to the electric field formed by electric charges on the inorganic oxide protection film to increase the bonding force between the magnetic disc and the lubricant. Further, since the lubricant contains neither polar groups nor reactive groups, the frictional force is small to obtain particularly satisfactory running performance of the head.

Further, the bonding force between the metal or semiconductor protection layer and the inorganic oxide protection layer is also high and the inorganic protection layer can be formed by a method such as oxidation by UV-rays in an $O_3$ atmosphere or oxidation in oxygen plasmas that can form a great amount of products all at once and, accordingly, the magnetic medium can be produced at a reduced cost uniformly.

The present invention will be described in more detail referring to examples.

**Example 1**

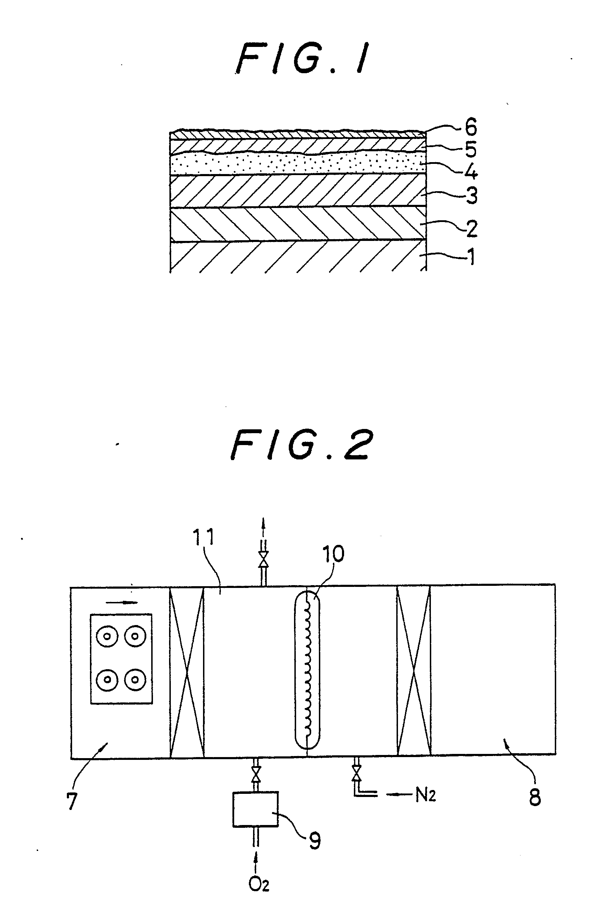

Fig. 1 is a cross sectional view illustrating the constitution of a magnetic recording medium according to the present invention. A chromium (Cr) layer 2 was formed as an underlying layer on a glass disc 1 applied with chemical reinforcement, and a cobalt-nickel-chromium (Co-Ni-Cr) alloy layer 3 was formed to a thickness of about 50 nm as a metal magnetic layer. Further, an Si film 4 was formed further thereover to a thickness of about 40 nm as a first protection film.

In this case, the underlying film 2, the metal magnetic film 3 and the first protection film 4 were successively formed on the glass substrate by using a sputtering method.

Fig. 2 is a schematic view illustrating an oxidizing device. The disc on which the films were formed including the first protection film 4 was attached to a jig capable of holding from several to several tens of such discs and then placed in a chamber 11 having an ozone atmosphere. Ozone was prepared by passing an oxygen gas through an ozonizer 9 at an oxygen gas flow rate of 500 ml/min. In the chamber, the silicon in the uppermost part of the disc was converted into a silicon oxide film 5 of about 3 nm thickness by irradiating UV-rays at a wavelength of 253.7 nm obtained from an UV-ray lamp 10 to the discs for 5 minutes. Residual ozone is discharged from the chamber 11 by purging with $N_2$ after the oxidation process.

A perfluoroalkyl polyether (trade name, Fomblin AM 2001) diluted to 5% in a trichlorotrifluoroethane solvent was coated over the film 5 by means of a dipping method and then left at 110°C for 5 minutes to form a lubricant layer 6.

The above-mentioned heat treatment applied after coating the lubricant serves for stably disposing the silicon oxide protection film and the lubricant and improving the bonding force.

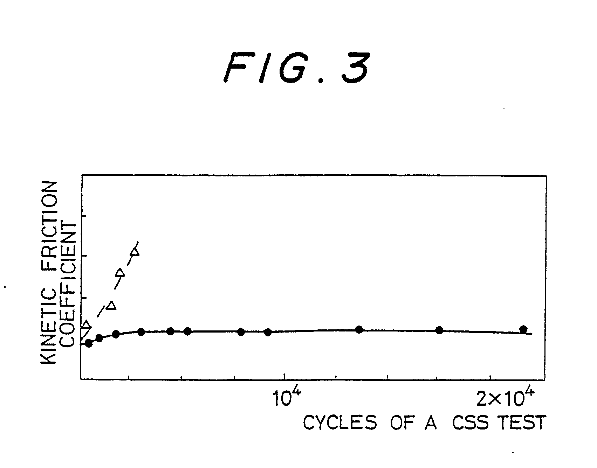

Fig. 3 shows a result of a test of rotating the disc at a high speed of 3600 rpm and bringing the head into contact with and separating the head from the disc repeatedly (CSS test). There were no changes at all to the surface of the disc even after the test for 20,000 cycles and increase of the kinetic frictional coefficient was also small.

**Example 2**

A disc on which the films were formed including the first protection film was placed in a pressure-reduced vessel in the same procedures as in Example 1 and an oxygen gas was introduced at a flow rate of 100 sccm (standard cubic centimeters per minute). The oxygen gas pressure was 20 Pa. Then, oxygen plasmas are formed by applying a high frequency voltage at 13.56 MHz between parallel flat electrodes disposed in the pressure-reduced vessel and the disc was exposed to plasmas for one minute. The uppermost surface of the silicon film as the first protection film was converted into a silicon oxide film of about 5 nm thickness by the treatment.

In the same way as in Example 1, the lubricant was coated over the silicon oxide film and then left at 110°C for 5 min. When the thus conditioned disc was subjected to the CSS test, no abnomality was observed on the surface of the disc at all even after the test for 20,000 cycles and the increase of the kinetic friction coefficient was also small.

**Example 3**

In the same procedures as those in Example 1, a chromium (Cr) film 2 was formed as an underlying layer on a glass disc 1 applied with chemical reinforcement and, further thereover, a cobalt-nickel-chromium (Co-Ni-Cr) alloy layer 3 was formed to a thickness of about 50 nm as a magnetic metal layer. Then, an yttrium-silicon (Y-Si:Si concentration at 25 atm%) as a first protection layer made of material different from that in Example 1 was formed further thereover to a thickness of about 20 nm. Also in this case, the underlying film 2, the magnetic metal film 3 and the first protection film 4 were formed successively on the glass substrate by using the sputtering method. When the yttrium-silicon film was examined by an X-ray diffraction apparatus, no peaks are observed at all and it was an amorphous film.

Subsequently, in the same procedures as those in Example 2, a disc on which films were formed including the first protection film was placed in a pressure-reduced vessel and an oxygen gas was introduced at a flow rate of 100 SCCM. The oxygen gas pressure was 20 Pa. In a state of heating the disc to 200°C by means of a disc heating heater disposed in the pressure-reduced vessel, a high frequency voltage at 13.56 MHz was applied between the parallel flat electrodes also disposed in the pressure-reduced vessel to generate oxygen plasmas, and the disc was exposed to the plasmas for 40 min. The surface layer of the yttrium-silicon alloy film as the first protection film was converted into a yttrium-silicon oxide film to about 10 nm.

In the same procedures as in Example 1, a lubricant was coated on the surface and left at 110° C for 5 min. When the thus prepared disc was subjected to a CSS test, no abnormality was observed at all to the disc surface even after the test for 20,000 cycles and the increase of the kinetic friction coefficient was also small.

Comparative Example

A carbon film was formed to 40 nm thickness by means of a sputtering method on a disc on which films were formed including the magnetic metal film in the same procedures as those in examples. Then, the same lubricant as in the previous examples was coated on the carbon film in the same procedures and then left at 110° C for 5 min. When the CSS test was conducted in the same way as in examples, abrasion flaws were formed on the disc at the 2000 cycle as shown in Fig. 3 and the value for the kinetic friction coefficient was increased remarkably.

As has been described above in accordance with the present invention, since the metal or semiconductor oxide film formed on the magnetic metal thin film can greatly improve the adhesion with the lubricant, the lubricancy and the wear resistance of the magnetic recording media can be improved remarkably.

Having described a specific preferred embodiment of the present invention with reference to the accompanying drawings, it is to be understood that the invention is not limited to that precise embodiment, and that various changes and modifications may be effected therein by one skilled in the art without departing from the scope or spirit of the invention as defined in the appended claims.

**Claims**

(1) Magnetic recording medium having a metal or semiconductor protection film the surface of which is applied with an oxidation treatment.

(2) Magnetic recording medium as defined in claim 1, wherein the metal or semiconductor comprises at least one selected from the group consisting of Si, Cr, Al, Ti, Ta, Zr, Nb, Mo, V, W and Y.

(3) Magnetic recording medium as defined in claim 2, wherein the metal or semiconductor contains C.

(4) Magnetic recording medium as defined in claim 2 wherein the metal or semiconductor is amorphous.

(5) A method of producing a magnetic recording medium which comprises:

forming a metal or semiconductor protection film on a magnetic film,

applying, to said metal or semiconductor protection film,

oxidation by irradiating UV-rays in an $O_3$ (ozone) atmosphere, or

oxidation with oxygen plasmas in a pressure-reduced vessel, thereby oxidizing the surface of said metal or semiconductor film.

# FIG. 1

6
5
4
3
2
1

# FIG. 2

11

10

7

9

8

N₂

O₂

# FIG.3